# EUROPÄISCHE PATENTSCHRIFT

(11) **EP 1 651 375 B1**
(45) Veröffentlichungstag und Bekanntmachung des Hinweises auf die Patenterteilung: **30.09.2009**
(21) Anmeldenummer: 04740749.9
(22) Anmeldetag: 07.07.2004
(51) Int. Cl.: B23D 33/00

(54) **VERFAHREN UND VORRICHTUNG ZUM BESÄUMEN EINES METALLSTRANGES**
METHOD AND DEVICE FOR TRIMMING A METAL CASTING
PROCEDE ET DISPOSITIF POUR EBARBER UNE BARRE METALLIQUE

(30) Priorität: 04.08.2003 DE 10335675
(43) Veröffentlichungstag der Anmeldung: 03.05.2006
(73) Patentinhaber: SMS Siemag AG, 40237 Düsseldorf (DE)
(72) Erfinder: KRETSCHMER, Matthias, 50939 Köln (DE); BEHRENS, Holger, 40699 Erkrath (DE); SOHL, Ralf-Hartmut, 42697 Solingen (DE); DE KOCK, Peter, 46117 Oberhausen (DE)
(74) Vertreter: Klüppel, Walter
(86) Internationale Anmeldenummer: PCT/EP2004/007436
(87) Internationale Veröffentlichungsnummer: WO 2005/016585

(56) Entgegenhaltungen:
- EP-A- 1 132 491
- WO-A-02/36294
- DE-A- 4 025 566
- DE-C- 4 039 877
- DE-C- 10 034 806
- PATENT ABSTRACTS OF JAPAN Bd. 0133, Nr. 20 (M-853), 20. Juli 1989 (1989-07-20) & JP 1 107981 A (KAWASAKI STEEL CORP), 25. April 1989 (1989-04-25)
- PATENT ABSTRACTS OF JAPAN Bd. 0072, Nr. 71 (M-260), 3. Dezember 1983 (1983-12-03) & JP 58 151981 A (TOKYO SHIBAURA DENKI KK), 9. September 1983 (1983-09-09) in der Anmeldung erwähnt

## Beschreibung

Die Erfindung betrifft ein Verfahren zum Besäumen eines Metallstranges gemäß dem Oberbegriff des Anspruchs 1, der in einer Fertigungsanlage in eine Förderrichtung bewegt wird, wobei der Metallstrang durch mindestens eine Besäumschere auf eine gewünschte Breite zugeschnitten wird. Des Weiteren betrifft die Erfindung eine Vorrichtung zum Besäumen eines Metallstranges gemäß dem Oberbegriff des Anspruchs 4.

Zur Schaffung einer gewünschten Breite eines Metallstranges werden Besäumscheren eingesetzt, mit denen es auch möglich ist, die beim Warmwalzen entstehende Naturkante des Metallstranges zu entfernen. In der Regel kommen dabei Kreismesserbesäumscheren zum Einsatz, die den Metallstrang auf die gewünschte Breite zuschneiden.

Selbst bei optimal eingestellten Messerspalten und Überdeckungen entsteht ein mehr oder weniger deutlich ausgebildeter Grat. Die Grate, die durch das mechanische Besäumen entstehen, können nachfolgende Anlagenteile beschädigen und beim Auswalzen Probleme bereiten, weshalb sie sehr unerwünscht sind.

Prinzipiell unterteilt man den Schnittbereich beim Besäumen eines Stahlbandes in einen durch die Messer geschnittenen Bereich und einen Gewaltbruchteil (Abscherung). Die Folge ist ein Grat an der Unterseite des Metallstrangs.

Eine Möglichkeit zum gratfreien Besäumen eines Metallstranges besteht im Einsatz einer Laserschneidanlage. Aufgrund der damit möglichen Schneidgeschwindigkeiten kann dieses Verfahren jedoch derzeit nicht wirtschaftlich eingesetzt werden.

Deshalb ist es notwendig, den Grat beim klassischen Besäumen in anderer Weise zu entfernen.

In der JP 58151981 A wird eine Vorrichtung zum Entgraten eines Metallstranges beschrieben, bei dem ein Laserstrahl im Anschluss an das mechanische Besäumen des Metallstranges auf die Endkante des Stranges gerichtet wird. Über eine Düse wird Druckluft an den Randbereich des Metallstranges geleitet, der zum einen den Metallstrang kühlt und zum anderen den durch den Laser aufgeschmolzenen Grat abbläst.

Auch die DE 100 34 806 C1 schlägt zum Entgraten eines Werkstücks einen Laserstrahl vor, der Wärme in das zu entgratende Werkstück einbringt, um einen entlang einer Werkstückkante verlaufenden Grat zumindest abschnittsweise zu entfernen.

Ein Laser zum Entgraten wird auch in der DE 40 25 566 A1 und in der DE 40 39 877 C1 eingesetzt. In beiden Fällen wird mittels eines Lasers der Grat so stark erhitzt, dass er aufschmilzt und abgeblasen werden kann bzw. sogar verdampft.

Die WO 02136294 A1 offenbart ein Verfahren sowie eine Vorrichtung gemäß dem Oberbegriff 2. des Anspruchs bzw. des Anspruchs 4. Der Schere ist eine Saumstreifenzerteilschere zugeordnet. Spezifische Maßnahmen zum Entgraten des beschnittenen Bandes sind nicht angesprochen.

Aus der JP 01 107 981 A geht eine Entgratvorrichtung für ein Stahlband hervor, wobei diese Induktionsspulen zum Aufheizen der Bandränder enthält. Das Band wird dabei mittels Rollenpaaren geführt und gehalten, die vor und hinter der Entgratvorrichtung angeordnet sind, so dass das Band linear durch die Entgratvorrichtung geführt werden kann.

Nachteilig ist bei den vorbekannten Einrichtungen zum Entfernen eines Grates, dass ein relativ hoher apparativer Aufwand getrieben werden muss, da Laseranlagen eingesetzt werden müssen, die unter anderem im Zusammenhang mit der Unfallverhütung einen hohen Aufwand erfordern und eine umfangreiche apparative Ausstattung erforderlich machen.

Der Erfindung liegt daher die Aufgabe zugrunde, ein Verfahren zum Besäumen eines Metallstranges sowie eine zugehörige Vorrichtung vorzuschlagen, mit dem bzw. mit der es möglich ist, die Besäumung in einfacher Weise vorzunehmen und gleichzeitig sicherzustellen, dass der besäumte Metallstrang keinen Grat aufweist.

Die Lösung dieser Aufgabe durch die Erfindung ist verfahrensgemäß dadurch gekennzeichnet, dass in Förderrichtung hinter der Besäumschere ein kurzzeitiges starkes Aufheizen des Randbereichs des Metallstranges mittels eines elektrischen Induktionselements erfolgt und dass in Förderrichtung hinter dem elektrischen Induktionselement ein Glätten des Metallstranges erfolgt.

Dabei ist bevorzugt vorgesehen, dass das Aufheizen des Randbereichs des Metallstranges mittels des elektrischen Induktionselements so erfolgt, dass der Randbereich kurzzeitig die Schmelztemperatur des Metallstranges erreicht.

Meistens wird vorgesehen, dass der Metallstrang durch zwei Besäumscheren auf die gewünschte Breite zugeschnitten wird.

Die Vorrichtung zum Besäumen eines Metallstranges, der in einer Fertigungsanlage in eine Förderrichtung bewegt wird, weist mindestens eine Besäumschere auf, mit der der Metallstrang auf eine gewünschte Breite zugeschnitten werden kann. Die Vorrichtung zeichnet sich erfindungsgemäß dadurch aus, dass in Förderrichtung hinter der Besäumschere im Randbereich des Metallstranges mindestens ein elektrisches Induktionselement angeordnet ist und dass in Förderrichtung hinter dem elektrischen Induktionselement mindestens eine Glättrolle angeordnet ist.

Das elektrische Induktionselement ist vorzugsweise eine Induktionsspule bzw. weist eine solche auf.

Für eine einfache und präzise Positionierung des elektrischen Induktionselements ist mit Vorteil vorgesehen, dass dieses über einen Träger an der Besäumschere angeordnet ist, so dass es in eine Richtung senkrecht zur Förderrichtung und senkrecht zur Normalen auf den Metallstrang relativ zur Besäumschere festliegt.

Bei der Besäumschere handelt es sich mit Vorteil um eine Kreismesserbesäumschere.

In der Zeichnung ist ein Ausführungsbeispiel der Erfindung dargestellt.
Es zeigen:
- Fig. 1: schematisch eine Vorrichtung zum Besäumen eines Metallstranges in der Seitenansicht,
- Fig. 2: die Vorrichtung gemäß Fig. 1 in der Draufsicht,
- Fig. 3: die Detailansicht eines Randbereichs des Metallstranges in Förderrichtung betrachtet in Höhe des elektrischen Induktionselements und
- Fig. 4: die Detailansicht eines Randbereichs des Metallstranges in Förderrichtung betrachtet in Höhe der Glättrolle.

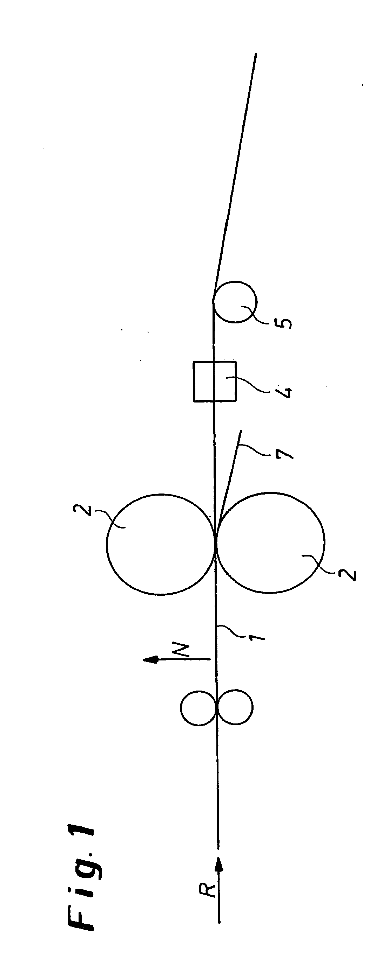

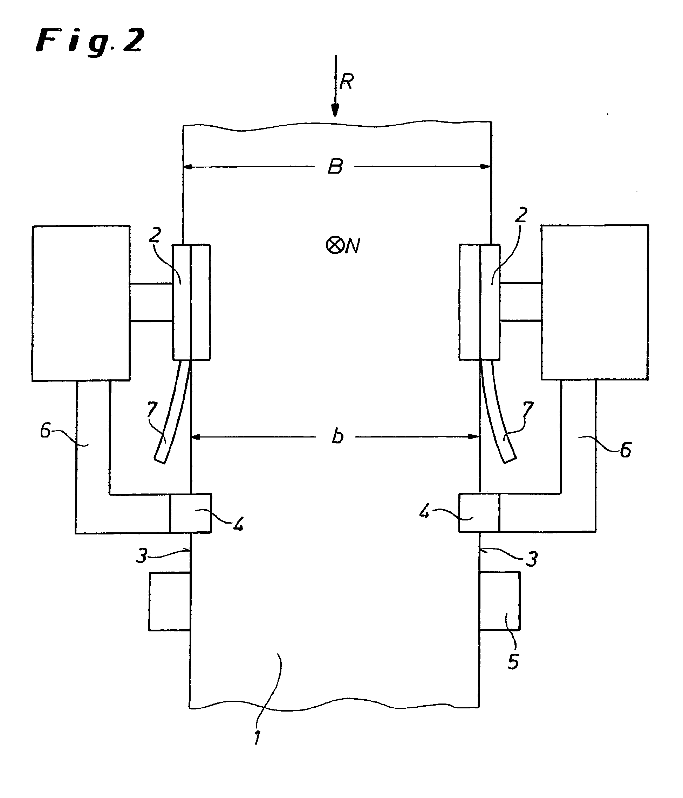

In den Figuren 1 und 2 ist schematisch eine Besäumvorrichtung für einen Metallstrang 1 in der Seitenansicht bzw. in der Draufsicht dargestellt. Der Metallstrang 1 bewegt sich in Förderrichtung R in die Vorrichtung und weist hier noch eine Breite B vor dem Besäumen auf. Es gilt, den Metallstrang 1 auf die Breite b nach dem Besäumen zuzuschneiden. Hierzu befindet sich in den beiden Randbereichen 3 des Metallstranges 1 je eine Besäumschere 2. Hierbei handelt es sich um eine Kreismesserbesäumschere.

Die Besäumscheren 2 schneiden den Saum 7 beidseitig vom Metallstrang 1 ab und führen ihn aus der Vorrichtung ab. Durch den Schneideprozess weist der Metallstrang 1 in seinen Randbereichen 3 einen Grat auf, der entfernt werden soll. Hierzu gelangen die Randbereiche 3 des Metallstranges 1 in Förderrichtung R betrachtet hinter den Besäumscheren 2 in den Einflussbereich eines elektrischen Induktionselements 4.

Das elektrische Induktionselement 4 ist so dimensioniert, dass es eine kurzfristige starke Aufheizung des Randbereichs 3 des Metallstranges 1 erzeugen kann. Diese Aufheizung erfolgt so, dass der Randbereich 3 kurzzeitig die Schmelztemperatur des Metallstranges 1 erreicht. Der Grat, der sich im Randbereich 3 des Metallstranges 1 befindet, schmilzt dadurch auf und verrundet, so dass er nach seiner Abkühlung keine Schäden mehr verursachen kann.

Durch das elektrische Induktionselement 4 wird also in sehr kurzer Zeit ein hoher Wärmeeintrag in den äußeren Bandkantenbereich eingeleitet, um ein Aufschmelzen und damit beim nachfolgenden Abkühlen ein Verrunden der Bandkante und namentlich des Grates zu erreichen.

Zur Schonung der Materialeigenschaften des Produktes muss die Wärmeeindringtiefe sehr gering sein, d.h. ein genau definierter Wärmeeintrag muss lokal erzeugt werden. Daher kommt als elektrisches Induktionselement 4 ein solches Element zum Einsatz, das aufgrund seiner hohen Energiedichte lokal eine sehr starke Erwärmung im Gratbereich bewirken kann, ohne große Bereiche des Metallstranges 1 zu erwärmen.

Insofern kommt der genauen Positionierung des elektrischen Induktionselements 4 eine hohe Bedeutung zu. Das elektrische Induktionselement 4 wird daher von einem Träger 6 so gehalten, dass seine Position in Richtung senkrecht zur Förderrichtung R und senkrecht zur Richtung der Normalen N auf den Metallstrang 1 relativ zur Besäumschere 2 festliegt. Bei der Verstellung der Besäumscheren 2 zum Abschneiden des Metallstranges 1 auf eine andere Breite b werden also die elektrischen Induktionselemente 4 entsprechend mitbewegt, so dass stets sichergestellt ist, dass sie ihre Wärmeenergie lediglich in den Randbereich 3 des Metallstranges 1 einleiten können.

In Förderrichtung R des Metallstranges 1 hinter den elektrischen Induktionselementen 4 ist eine Glättrolle 5 angeordnet, die den Metallstrang 1 in der benötigten Höhenposition hält und ansonsten eine Glättung, insbesondere der Randbereiche 3 des Metallstranges 1, sicherstellt.

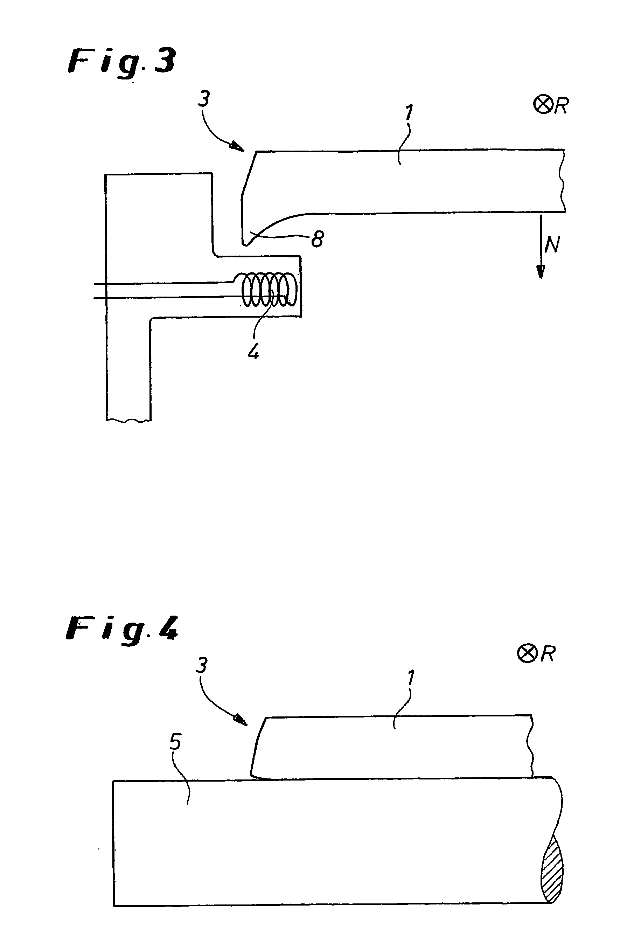

In Figur 3 ist in vergrößerter Darstellung noch einmal der Randbereich 3 des Metallstranges 1 zu erkennen, wie er über das elektrische Induktionselement 4 läuft. Nur sehr schematisch ist eine Spule angedeutet, mit der die elektrische Induktion bewerkstelligt wird. Der Grat 8 wird durch die Energie aufgeschmolzen, die durch das elektrische Induktionselement 4 in den Randbereich 3 des Metallstranges 1 eingebracht wird.

In Figur 4 ist die Glättrolle 5 zu erkennen und der Metallstrang 1, der über sie geführt wird. Der Metallstrang 1 ist bei Kontakt mit der Glättrolle 5 bereits wieder abgekühlt, so dass sich insgesamt eine Verrundung des Randbereichs 3 ergeben hat, wie es aus Figur 4 schematisch hervorgeht.

### Bezugszeichenliste:

- 1: Metallstrang
- 2: Besäumschere (Kreismesserbesäumschere)
- 3: Randbereichs des Metallstranges
- 4: elektrisches Induktionselement
- 5: Glättrolle
- 6: Träger
- 7: Saum
- 8: Grat

- R: Förderrichtung des Metallstranges
- B: Breite des Metallstranges vor dem Besäumen
- b: Breite des Metallstranges nach dem Besäumen
- N: Normalenrichtung auf den Metallstrang

## Patentansprüche

1. Verfahren zum Besäumen eines Metallstranges (1), der in einer Fertigungsanlage in eine Förderrichtung (R) bewegt wird, wobei der Metallstrang (1) durch mindestens eine Besäumschere (2) auf eine gewünschte Breite (b) zugeschnitten wird,
**dadurch gekennzeichnet,**
**dass** in Förderrichtung (R) hinter der Besäumschere (2) ein kurzzeitiges starkes Aufheizen des Randbereichs (3) des Metallstranges (1) mittels eines elektrischen Induktionselements (4) erfolgt und dass in Förderrichtung (R) hinter dem elektrischen Induktionselement (4) ein Glätten des Metallstranges (1) erfolgt.

2. Verfahren nach Anspruch 1,
**dadurch gekennzeichnet,**
**dass** das Aufheizen des Randbereichs (3) des Metallstranges (1) mittels des elektrischen Induktionselements (4) so erfolgt, dass der Randbereich (3) kurzzeitig die Schmelztemperatur des Metallstranges (1) erreicht.

3. Verfahren nach Anspruch 1 oder 2,
**dadurch gekennzeichnet,**
**dass** der Metallstrang (1) durch zwei Besäumscheren (2) auf die gewünschte Breite (b) zugeschnitten wird.

4. Vorrichtung zum Besäumen eines Metallstranges (1), der in einer Fertigungsanlage in eine Förderrichtung (R) bewegt wird, die mindestens eine Besäumschere (2) aufweist, mit der der Metallstrang (1) auf eine gewünschte Breite (b) zugeschnitten werden kann, insbesondere zur Durchführung des Verfahrens nach einem der Ansprüche 1 bis 3,
**dadurch gekennzeichnet,**
**dass** in Förderrichtung (R) hinter der Besäumschere (2) im Randbereich (3) des Metallstranges (1) mindestens ein elektrisches Induktionselement (4) angeordnet ist und dass in Förderrichtung (R) hinter dem elektrischen Induktionselement (4) mindestens eine Glättrolle (5) angeordnet ist.

5. Vorrichtung nach Anspruch 4,
**dadurch gekennzeichnet,**
**dass** das elektrische Induktionselement (4) eine Induktionsspule ist.

6. Vorrichtung nach Anspruch 4 oder 5,
**gekennzeichnet durch,**
zwei Besäumscheren (2) für die beiden Randbereiche (3) des Metallstranges (1).

7. Vorrichtung nach einem der Ansprüche 4 bis 6,
**dadurch gekennzeichnet,**
**dass** das elektrische Induktionselement (4) über einen Träger (6) an der Besäumschere (2) angeordnet ist, so dass es in eine Richtung senkrecht zur Förderrichtung (R) und senkrecht zur Normalen (N) auf den Metallstrang (1) relativ zur Besäumschere (2) festliegt.

8. Vorrichtung nach einem der Ansprüche 4 bis 7,
**dadurch gekennzeichnet,**
**dass** die Besäumschere (2) eine Kreismesserbesäumschere ist.

## Claims

1. Method of trimming a metal strip (1) which is moved in a finishing plant in a conveying direction (R), wherein the metal strip (1) is cut to a desired width (b) by at least one trimming shears (2), **characterised in that** a transient strong heating of the edge region (3) of the metal strip (1) is carried out behind the trimming shears (2) in conveying direction (R) by means of an electric induction element (4) and that a smoothing of the metal strip (1) is carried out behind the electric induction element (4) in conveying direction (R).

2. Method according to claim 1, **characterised in that** the heating of the edge region (3) of the metal strip (1) is so carried out by means of the electric induction element (4) that the edge region (3) temporarily attains the melting temperature of the metal strip (1).

3. Method according to claim 1 or 2, **characterised in that** the metal strip (1) is cut to the desired width (b) by two trimming shears (2).

4. Device for trimming a metal strip (1) moved in a finishing plant in a conveying direction (R), which device comprises at least one trimming shears (2) by which the metal strip (1) can be cut to a desired width (b), particularly for performance of the method according to any one of claims 1 to 3, **characterised in that** at least one electric induction element (4) is arranged in the edge region (3) of the metal strip (1) behind the trimming shears (2) in conveying direction (R) and that at least one smoothing roller (5) is arranged behind the electric induction element (4) in conveying direction (R).

5. Device according to claim 4, **characterised in that** the electric induction element (4) is an induction coil.

6. Device according to claim 4 or 5, **characterised by** two trimming shears (2) for the two edge regions (3) of the metal strip (1).

7. Device according to any one of claims 4 to 6, **characterised in that** the electric induction element (4) is arranged at the trimming shears (2) by way of a support (6) so that it is fixed relative to the trimming shears (2) in a direction perpendicular to the conveying direction (R) and perpendicular to the normal (N) to the metal strip (1).

8. Device according to any one of claims 4 to 7, **characterised in that** the trimming shears (2) are a circular knife trimming shears.

## Revendications

1. Procédé pour le rognage d'une barre métallique (1) qui se déplace dans une direction de convoyage (R) dans une installation de production, dans lequel la barre métallique (1) est recoupée à une largeur souhaitée (b) par au moins une cisaille de rognage (2),
**caractérisé en ce que** l'on procède, en arrière de la cisaille de rognage (2) en direction de convoyage (R), à un bref réchauffement intense de la zone de bordure (3) de la barre métallique (1) au moyen d'un élément électrique à induction (4), et **en ce que** l'on procède, en arrière de l'élément électrique à induction (4) en direction de convoyage (R), à un lissage de la barre métallique (1).

2. Procédé selon la revendication 1,
**caractérisé en ce que** le réchauffement de la zone de bordure (3) de la barre métallique (1) au moyen de l'élément électrique à induction (4) est effectué de telle manière que la zone de bordure (3) atteint brièvement la température de fusion de la barre métallique (1).

3. Procédé selon la revendication 1 ou 2,
**caractérisé en ce que** la barre métallique (1) est recoupée à la largeur souhaitée (b) par deux cisailles de rognage (2).

4. Appareil pour le rognage d'une barre métallique (1) qui se déplace dans une direction de convoyage (R) dans une installation de production, qui comprend au moins une cisaille de rognage (2) avec laquelle la barre métallique (1) peut être recoupée à une largeur souhaitée (b), en particulier et pour la mise en oeuvre du procédé selon l'une des revendications 1 à 3,
**caractérisé en ce que**, derrière la cisaille de rognage (2) en direction de convoyage (R), au moins un élément électrique à induction (4) est agencé dans la zone de bordure (3) de la barre métallique (1), et **en ce que**, derrière l'élément électrique à induction (4) en direction de convoyage (R), est agencé au moins un rouleau de lissage (5).

5. Appareil selon la revendication 4,
**caractérisé en ce que** l'élément électrique à induction (4) est une bobine à induction.

6. Appareil selon la revendication 4 ou 5,
**caractérisé par** deux cisailles de rognage (2) pour les deux zones de bordure (3) de la barre métallique (1).

7. Appareil selon l'une des revendications 4 à 6,
**caractérisé en ce que** l'élément électrique à induction (4) est agencé au niveau de la cisaille de rognage (2) au moyen d'un support (6), de telle manière qu'il est immobilisé dans une direction perpendiculairement à la direction de convoyage (R) et perpendiculairement à la normale (N) à la barre métallique (1) par rapport à la cisaille de rognage (2).

8. Appareil selon l'une des revendications 4 à 7,
**caractérisé en ce que** la cisaille de rognage (2) est une cisaille de rognage à couteaux circulaires.
